# EUROPÄISCHE PATENTSCHRIFT

(11) **EP 4 110 582 B1**
(45) Veröffentlichungstag und Bekanntmachung des Hinweises auf die Patenterteilung: **27.03.2024**
(21) Anmeldenummer: 21706511.9
(22) Anmeldetag: 15.02.2021
(51) Int. Cl.: B29C 48/00, B29C 48/02, B29C 48/285, B29C 48/50, A21C 11/16, A23L 7/117, A23P 30/20, B29B 7/60

(54) **EINRICHTUNG ZUR ZUFÜHRUNG EINER ROHSTOFFMENGE IN EINE EXTRUSIONSMASCHINE, SOWIE DARAUF BEZOGENES VERFAHREN**
DEVICE FOR SUPPLYING A RAW MATERIAL QUANTITY TO AN EXTRUSION MACHINE, AND RELATED METHOD
DISPOSITIF D'ALIMENTATION D'UNE QUANTITÉ DE MATIÈRE PREMIÈRE DANS UNE MACHINE D'EXTRUSION, ET PROCÉDÉ ASSOCIÉ

(30) Priorität: 27.02.2020 DE 102020105197
(43) Veröffentlichungstag der Anmeldung: 04.01.2023
(73) Patentinhaber: Hebenstreit GmbH, 64546 Mörfelden-Walldorf (DE)
(72) Erfinder: DUSCHKA, Friedrich, 01139 Dresden (DE); FÖRSTER, Ralph Olaf, 01108 Dresden (DE); MERFORTH, Egbert, 01099 Dresden (DE); ENGELMANN, Michael, 65474 Bischofsheim (DE); ROLF-WITTLAKE, Antonius, 26169 Kurfürstendamm 27 (DE)
(74) Vertreter: Habermann Intellectual Property Partnerschaft von Patentanwälten mbB
(86) Internationale Anmeldenummer: PCT/EP2021/053659
(87) Internationale Veröffentlichungsnummer: WO 2021/170443

(56) Entgegenhaltungen:
- EP-A1- 0 888 857
- EP-B1- 1 608 235
- DE-A1- 3 636 867
- DE-A1- 4 410 932
- DE-B- 1 055 423
- DE-C1- 3 529 523
- DE-T2- 69 925 708

## Beschreibung

Die Erfindung betrifft eine Zuführeinrichtung zur Zuführung einer Rohstoffmenge in eine Extrusionsmaschine mit einem Zuführkanalabschnitt mit einer Austrittsöffnung und mit einem Einfülltrichter, wobei die Rohstoffmenge durch die Austrittsöffnung des Zuführkanalabschnitts in eine Einfüllöffnung des Einfülltrichters gefördert und durch den Einfülltrichter hindurch der Extrusionsmaschine zugeführt wird sowie ein darauf bezogenes Verfahren.

Allgemein aus der Praxis bekannt werden derartige Zuführeinrichtungen in der lebensmittelproduzierenden Industrie eingesetzt, um Produktionsmaschinen, wie beispielsweise Extrusionsmaschinen, die zur Herstellung von Snacks oder Teigwaren genutzt werden, mit Rohstoffmengen zu beschicken. Da ein Extrusionsprozess kontinuierlich abläuft und kontinuierlicherweise ein Extrudat erzeugt, ist auch eine kontinuierliche und insbesondere gleichmäßige Beschickung der Extrusionsmaschine mit einer Rohstoffmenge notwendig.

Aus dem Stand der Technik sind Zuführeinrichtungen für Extrusionsmaschinen bekannt, in denen die Rohstoffmenge durch eine Zuführöffnung der Produktionsmaschine zugeführt wird, wobei die Zuführung der Rohstoffmenge schwerkraftunterstützt von oben in die Zuführöffnung der Produktionsmaschine erfolgt. Mittels einer Extrusionsmaschine werden bekannterweise auch Rohstoffmischungen verarbeitet, die aus einzelnen Rohstoffen mit unterschiedlichen Eigenschaften zusammengesetzt sind. Dabei wird beispielsweise ein fließfähiges Material extrudiert und diesem über einen Einfülltrichter zusätzliche Additive zugeführt. Diese Additive werden oftmals aus Vorratsbehältern entnommen und dem Einfülltrichter der Zuführeinrichtung zugeführt. Häufig erfolgt die Zuführung der Additive schwerkraftunterstützt durch ein Herabrieseln von oben in den darunter angeordneten Einfülltrichter. Um ein Extrudat mit einer gleichbleibenden Konsistenz und Zusammensetzung zu erhalten, sollten die Additive möglichst gleichmäßig der Produktionsmaschine zugeführt werden.

Die Additive können beispielsweise aus einem Rohstoff mit einem hohen Anteil von Fasern bestehen und in einem getrockneten Zustand eine rieselfähige Rohstoffmischung bilden. Bekannterweise sind Rohstoffmischungen mit einem hohen Anteil an Fasern schlecht fließfähig und schwer förderbar, wodurch eine Gefahr einer Brückenbildung innerhalb der Zuführeinrichtung entstehen kann. Durch die Brückenbildung kann die Zuführeinrichtung verstopfen, sodass keine weitere Zuführung der Rohstoffmenge in die Produktionsmaschine möglich ist. Die Ursache für die Brückenbildung sind bei feinkörnigen Rohstoffmengen, beispielsweise bei feinkörnigem, kohäsivem Rohstoffpartikeln, die Haftkräfte zwischen den einzelnen Rohstoffpartikeln. Bei grobkörnigen Rohstoffmengen ist die Ursache für die Brückenbildung ein Verkeilen der Rohstoffpartikel. Somit entsteht bei der Brückenbildung und einer weiteren Zuführung einer Rohstoffmenge im Bereich der Brücke ein Rohstoffmengenüberschuss, der zu einer Verstopfung der Zuführöffnung der Zuführeinrichtung führt. Je nach Beschaffenheit der Rohstoffmenge und der Ausgestaltung der Zuführeinrichtung können sich die Brücken wieder auflösen und eine weitere Zuführung der Rohstoffmenge in die Produktionsmaschine bewirken, wodurch ungünstigerweise eine unregelmäßige Zuführung der Rohstoffmenge in die Produktionsmaschine entsteht. Derartige Rohstoffmengen, bei deren Zuführung eine hohe Gefahr der Brückenbildung besteht, werden als schlecht fließfähig und damit schwer förderbar angesehen. Der Aufwand für eine kontrollierte und gleichmäßige Zuführung von schlecht fließenden und schwer förderbaren Rohstoffen ist oftmals erheblich.

Aus dem Stand der Technik sind Zuführeinrichtungen für Extrusionsmaschinen bekannt, in denen die Rohstoffmenge durch ein Zuführrohr und durch einen Zuführtrichter der Produktionsmaschine zugeführt wird, wobei das Zuführrohr meist statisch und stationär oberhalb des Zuführtrichters angebracht ist, um eine schwerkraftunterstützte Zuführung der Rohstoffmenge in die Produktionsmaschine zu ermöglichen. Durch die stationäre Anordnung des Zuführrohrs oberhalb des Zuführtrichters kann innerhalb des Zuführtrichters die Brückenbildung entstehen und die weitere Zufuhr mit Rohstoffmenge verhindern. Die Gefahr der Brückenbildung innerhalb des Zuführtrichters wird außerdem durch die Verjüngung des Querschnitts des Zuführtrichters in Richtung der Produktionsmaschine nachteilhafterweise verstärkt. Dadurch kann eine gleichmäßige und kontinuierliche Zuführung der Rohstoffmenge nicht gewährleistet werden.

In EP 0 888 857 A1 ist eine Vorrichtung zum Zuführen einer Rohstoffmenge in eine Produktionsmaschine offenbart, bei welcher der Einfülltrichter beispielsweise zu Wartungs- oder Reinigungszwecken relativ zu der Förderschnecke verlagerbar ist. Im Hinblick auf die Betriebssicherheit kann durch einen Signalgeber in Abhängigkeit von der Position des Einfülltrichters der Antrieb der Förderschnecke abgeschaltet, bzw. eingeschaltet werden.

Beispielsweise aus DE 44 10 932 A1 oder DE 35 29 523 C1 sind Vorrichtungen zum Zuführen einer Rohstoffmenge in eine Produktionsmaschine bekannt, bei denen der Einfülltrichter relativ zu einer Förderschnecke verlagert werden kann, um einen unterschiedlichen Materialzulauf zu ermöglichen. Auf diese Weise kann entweder gemäß DE 44 10 932 A1 durch eine Verlagerung des Einfülltrichters relativ zu der entlang der Förderschnecke unterschiedlich vorgegebenen Steigung der Schneckengänge oder aber durch konische Nuten in einer die Förderschnecke umgebenden Nutbüchse gemäß DE 35 29 523 C1 ein unterschiedlicher Materialzulauf vorgegeben werden. Ergänzend wird noch auf die EP 1 608 235 B1 verwiesen, die ein Verfahren zur Herstellung synergistischer hypoglykämischer Nahrungsmittel und daraus erhaltener Formulierungen von hoher struktureller und sensorieller Qualität offenbart, die als Snacks bzw. als gesunde oder ergänzende Nahrungsmittel dienen sollen.

Es wird deshalb als eine Aufgabe der vorliegenden Erfindung angesehen, eine Vorrichtung zur Zuführung einer Rohstoffmenge in eine Extrusionsmaschine so auszugestalten, dass die Zuführung der Rohstoffmenge ohne Brückenbildung und damit zuverlässig und kontinuierlich möglich ist.

Diese Aufgabe wird erfindungsgemäß vermittelst einer Zuführeinrichtung zur Zuführung einer Rohstoffmenge in eine Extrusionsmaschine nach Anspruch 1 dahingehend gelöst, dass die Zuführeinrichtung mindestens eine Stelleinrichtung aufweist, mit welcher eine Stellbewegung des Zuführkanalabschnitts und/oder des Einfülltrichters erzeugbar ist, wodurch eine Verlagerung des Zuführkanalabschnitts relativ zu dem Einfülltrichter bewirkt werden kann, sodass die dem Einfülltrichter zugeführte Rohstoffmenge an unterschiedlichen Einfüllpositionen innerhalb der Zuführöffnung einstellbar ist, sodass eine besonders gleichmäßige Zuführung der Rohstoffmenge möglich ist.

Als Stelleinrichtung können elektrisch, pneumatisch oder hydraulisch betriebene Aktoren eingesetzt werden, die handelsüblich und in einer Vielzahl von Ausführungsformen erhältlich sind. Beispielsweise sind pneumatisch angetriebene Aktoren für lineare Stellbewegungen bei großen Wegstrecken der Stellbewegung erhältlich, wobei die Wegstrecken meist durch einen Anschlag begrenzt ist. Mit derartigen pneumatischen Aktoren kann außerdem bis zu einer gewissen niedrigfrequenten Schaltfrequenz eine Richtungsumkehr der Stellbewegung durchgeführt werden. Mittels elektrisch betriebener Aktoren, wie beispielsweise Ultraschallaktoren, können hochfrequente Stellbewegungen mit kleinen Wegstrecken der Stellbewegung erzeugt werden.

Derartige Stelleinrichtungen werden häufig im Bereich der Förderung von Schüttgütern eingesetzt, um den Fluss der Schüttgüter in Fördereinrichtungen entlang einer Förderstrecke oder innerhalb von Zuführeinrichtungen anzuregen. Beispielsweise werden Schwingungen zur Anregung der Fördereinrichtungen durch hochfrequente vibratorische lineare Stellbewegungen erzeugt. Nichtlineare Stellbewegungen können durch Stelleinrichtungen erzeugt werden, die als Unwuchtaktoren ausgeführt sind. Durch Unwuchtaktoren können auch oszillierende oder kreisförmige Stellbewegungen ausgeführt werden.

Gemäß einer vorteilhaften Ausgestaltung des Erfindungsgedankens ist vorgesehen, dass durch die mindestens eine Stelleinrichtung erzeugbare Stellbewegung eine Verlagerung des Zuführkanalabschnitts oder des Einfülltrichters bewirkt, sodass ein Abstand zwischen einer Längsachse des Zuführrohes und einer Längsachse des Einfülltrichters einstellbar ist. Somit kann es je nach Ausgestaltung der erfindungsgemäßen Zuführeinrichtung von Vorteil sein, entweder den Zuführkanalabschnitt oder den Einfülltrichter zu verlagern. Dabei ist die Abstandsänderung besonders einfach durch eine lineare Stellbewegung und einer Verlagerung derjenigen Komponente erzeugbar, die eine Verlagerung aufgrund der konstruktiven Ausgestaltung der Zuführeinrichtung am einfachsten zulässt. Beispielsweise kann der Zuführkanalabschnitt auf der Seite der Austrittsöffnung besonders einfach verlagert werden, wenn dieser als freies Ende ausgeführt ist und dadurch eine Verlagerung zulässt.

Einer besonders vorteilhaften Ausgestaltung des Erfindungsgedankens zufolge ist vorgesehen, dass durch die mindestens eine Stelleinrichtung erzeugbare Stellbewegung die Verlagerung und/oder eine Verkippung des Zuführkanalabschnitts oder des Einfülltrichters bewirkt, sodass ein Neigungswinkel zwischen einer Längsachse des Zuführkanalabschnitts und einer Längsachse des Einfülltrichters einstellbar ist. Beispielsweise kann besonders vorteilhaft der Zuführkanalabschnitt an der einen Seite an einem Lager schwenkbar gelagert sein, sodass auf der anderen Seite durch die Stellbewegung der Stelleinrichtung eine Verlagerung der Austrittsöffnung des Zuführkanalabschnitts entlang einer kreisförmigen Bahn stattfindet. Eine derartige Verlagerung des Zuführkanalabschnitts kann besonders einfach und mit einem geringen konstruktiven und mechanischen Aufwand realisiert werden.

In vorteilhafter Weise ist es optional möglich, dass der laterale Abstand und/oder der Neigungswinkel zwischen der Längsachse des Zuführkanalabschnitts und der Längsachse des Einfülltrichters durch die Verlagerung und/oder die Verkippung des Zuführkanalabschnitts und des Einfülltrichters einstellbar ist, wodurch eine relative Verlagerung des Zuführkanalabschnitts und des Einfülltrichters in entgegengesetzten Richtungen zu einer Vergrößerung des relativen Abstands führt. Dadurch ist der einstellbare relative Abstand und/oder der einstellbare Neigungswinkel, insbesondere bei einer Ausgestaltung der Zuführeinrichtung, bei der die zulässigen Wegstrecken der Stellbewegung der Einzelkomponenten mechanisch auf eine kleine Wegstrecke begrenzt sind, vergrößerbar, sodass die zugeführte Rohstoffmenge an unterschiedlichen Einfüllpositionen innerhalb der Zuführöffnung verteilbar ist.

Weiterhin ist es ebenfalls möglich, dass die durch die mindestens eine Stelleinrichtung erzeugbare Stellbewegung richtungswechselnd ausführbar ist. Durch eine richtungsändernde Stellbewegung lässt sich besonders einfach eine oszillierende Stellbewegung des Zuführkanalabschnitts und/oder des Einfülltrichter erzeugen. Durch eine oszillierende Stellbewegung des rohstoffmengenführenden Zuführkanalabschnitts und/oder des Einfülltrichters sind die Fließfähigkeit und die Förderbarkeit von insbesondere schlecht fließenden oder schwer förderbaren Rohstoffmengen steigerbar. Damit wird insbesondere die Gefahr der Brückenbildung reduziert und eine kontinuierliche und gleichmäßige Zuführung der Rohstoffmenge in die Extrusionsmaschine begünstigt.

Einer besonders vorteilhaften Ausgestaltung des Erfindungsgedankens zufolge ist vorgesehen, dass die Wegstrecke der durch die mindestens eine Stelleinrichtung erzeugbare Stellbewegung einstellbar ist. Die Änderung der Wegstrecke der Stellbewegung kann vorteilhafter durchgeführt werden, um die Verlagerung des Zuführkanalabschnitts und der Einfüllöffnung beispielsweise auf unterschiedliche Durchmesser des Zuführkanalabschnitts und der Einfüllöffnung abzustimmen. Beispielsweise kann bei einem im Vergleich zur Einfüllöffnung kleinen Durchmesser der Austrittsöffnung des Zuführkanalabschnitts eine größere Wegstrecke des Zuführkanalabschnitts relativ zur Einfüllöffnung des Einfülltrichters zurückgelegt werden, sodass die Rohstoffmenge während der Stellbewegung kontinuierlich in den Zuführtrichter zugeführt werden kann. Somit ist besonders vorteilhaft die Rohstoffmenge an unterschiedlichen Einfüllpositionen innerhalb der Zuführöffnung zuführbar.

Es ist ebenfalls denkbar und im Hinblick auf eine möglichst große Beeinflussbarkeit der Rohstoffzuführung vorteilhaft, dass die Geschwindigkeit der durch die mindestens eine Stelleinrichtung erzeugbare Stellbewegung innerhalb der Wegstrecke der Stellbewegung veränderbar ist. Dadurch lassen sich niederfrequente und hochfrequente oszillierende Stellbewegungen realisieren. Durch hochfrequente oszillierende Stellbewegungen, mit denen die Verlagerung der Zuführkanalabschnitts und/oder des Einfülltrichters durchgeführt wird, sind die Fließfähigkeit und die Förderbarkeit von schlecht fließfähigen und schlecht förderbaren Rohstoffen vergrößerbar, wodurch die Gefahr der Brückenbildung vorteilhaft reduzierbar ist.

In vorteilhafter Weise ist es optional möglich, dass die Beschleunigung der durch die mindestens eine Stelleinrichtung erzeugbare Stellbewegung innerhalb der Wegstrecke veränderbar ist. Durch eine hohe Beschleunigung der Stellbewegung und der Verlagerung des Zuführkanalabschnitts oder des Zuführtrichters, kann beispielsweise eine schlagende Stellbewegung realisiert werden, wodurch die Brückenbildung besonders vorteilhaft vermieden werden kann.

Außerdem ist durch eine geringe Beschleunigung der Stellbewegung eine sanfte Stellbewegung erzeugbar, um beispielweise gut fließfähige Rohstoffmengen in Pendelbewegungen dem Zuführtrichter zuzuführen, sodass eine besonders kontinuierliche und gleichmäßige Zuführung der Rohstoffmenge an unterschiedlichen Einfüllpositionen des Zuführtrichters möglich ist.

Weiterhin ist es ebenfalls möglich, dass der Durchmesser der Einfüllöffnung des Einfülltrichters größer ist als der Durchmesser der Austrittsöffnung des Zuführkanalabschnitts, wodurch besonders große Wegstrecken zur Verlagerung des Zuführkanalabschnitts oder des Zuführtrichters durchführbar sind. Somit kann besonders vorteilhaft in großen Bereichen und an unterschiedlichen Einfüllpositionen innerhalb der Zuführöffnung eine gleichmäßige Zuführung der Rohstoffmenge erreicht werden, sodass die Gefahr der Brückenbildung reduzierbar ist.

Die vorliegende Erfindung betrifft auch ein Verfahren zur Verarbeitung einer Rohstoffmischung in einer Extrusionsmaschine zur Herstellung eines Lebensmittelprodukts.

Es ist bekannt, Extrusionsprozesse in der Lebensmittelproduktion für die Produktion von Teigwaren, Snackwaren oder für die Herstellung von Frühstückscerealien zu nutzen. Der Extrusionsprozess wird mittels einer Extrusionsmaschine, die beispielsweise als Zweischnecken-Extrusionsmaschine ausgeführt sein kann, durchgeführt. Dabei wird unter Einfluss von Druck und Temperatur der zu verarbeitende Rohstoff oder die Rohstoffmischung durch eine definierte Öffnung, beispielsweise eine Düse gepresst und das erstarrte Extrudat am Ausgang der Düse mithilfe einer Schneidevorrichtung in Form gebracht. Während des Extrusionsprozesses erfährt der zu verarbeitende Rohstoff eine chemische bzw. physikalische Modifikation, wodurch die Extrudateigenschaften bzw. die Eigenschaften des Produkts eingestellt werden können. Die Extrudateigenschaften, wie beispielweise eine Textur, eine Dichte, ein Feuchtegehalt oder eine Porigkeit werden sowohl von den Rohstoffeigenschaften als auch von den Extrusionsparametern, wie beispielsweise ein Aufbau und eine Art des Extruders, eine Schneckendrehzahl einer Extruderschnecke, ein Eintrag von thermischer und mechanischer Energie, ein Durchmesser oder eine Art der Düse bestimmt. Um ein Extrudat mit einer gleichbleibenden Konsistenz und Zusammensetzung zu erhalten, sollten die Rohstoffe der Rohstoffmischung möglichst gleichmäßig der Extrusionsmaschine zugeführt werden. Um die Rohstoffe gleichmäßig der Extrusionsmaschine zuführen zu können, müssen die Rohstoffe bestimmte Rohstoffeigenschaften, insbesondere eine gute Fließfähigkeit oder eine gute Rieselfähigkeit aufweisen. Um die Rohstoffeigenschaften im Hinblick auf eine gute Fließfähigkeit oder eine gute Rieselfähigkeit einzustellen, sind je nach Rohstoff einige Vorbereitungsschritte notwendig. Ein Rohstoff kann auch beispielsweise in einem pulverförmigen, mehlförmigen oder griesförmigen Zustand vorliegen und erst durch eine Hinzugabe von Wasser oder einem anderen geeigneten flüssigen Bindemittel zu einem extrudierbaren Rohstoff verarbeitet werden. Die Flüssigkeit kann dabei dem Rohstoff vorab zugefügt und der extrudierbare Rohstoff der Extrusionsmaschine zugeführt werden. Es ist auch möglich und praktikabel, den noch nicht extrudierbaren Rohstoff einerseits und gesondert dazu die Flüssigkeit der Extrusionsmaschine zuzuführen, um in der Extrusionsmaschine eine extrudierbare Rohstoffmischung herzustellen.

Bei der Verarbeitung eines Vollkorngetreidemehls oder -schrots entstehen Rohstoffmischungen mit einem hohen Faseranteil aufgrund der enthaltenen Hüllenbestandteile des Getreidekorns. Ein hoher Anteil von Fasern innerhalb einer Rohstoffmischung kann zu einer schlechten Fließfähigkeit oder zu einer schlechten Rieselfähigkeit der Rohstoffmischung führen, wodurch die Rohstoffmischung nur schwer förderbar ist und die Gefahr einer Brückenbildung innerhalb der Zuführeinrichtung besteht. Durch eine solche Brückenbildung kann die Zuführeinrichtung verstopfen, sodass keine weitere Zuführung einer Rohstoffmenge in die Produktionsmaschine möglich ist. Die Ursache für die Brückenbildung bei feinkörnigen Rohstoffmengen, beispielsweise bei feinkörnigem, kohäsivem Rohstoffpartikeln, sind die Haftkräfte zwischen den einzelnen Rohstoffpartikeln. Bei grobkörnigen Rohstoffen ist die Ursache für die Brückenbildung ein Verkeilen der Rohstoffpartikel. Somit entsteht bei der Brückenbildung und einer weiteren Zuführung einer Rohstoffmenge im Bereich der Brücke ein Rohstoffmengenüberschuss, der zu einer Verstopfung der Zuführeinrichtung führt. Je nach Beschaffenheit der Rohstoffmenge und der Ausgestaltung der Zuführeinrichtung können sich die Brücken wieder auflösen und eine weitere Zuführung der Rohstoffmenge in die Produktionsmaschine bewirken, wodurch ungünstigerweise eine unregelmäßige Zuführung der Rohstoffmenge in die Produktionsmaschine entsteht und eine gleichbleibende Konsistenz und Zusammensetzung des Extrudats nicht sichergestellt werden kann. Derartige Rohstoffmengen, bei deren Zuführung eine hohe Gefahr der Brückenbildung besteht, werden als schlecht fließfähig und damit schwer förderbar angesehen.

Aus Lebensmittelproduktionen sind hochwertige Prozessnebenprodukte wie Presskuchen oder Filterkuchen bekannt. Presskuchen, auch als Trester bezeichnet, sind Lebensmittelrückstände, die nach dem Auspressen des Saftes von Obst, Gemüse oder Pflanzenbestandteilen übrig bleiben. Die Presskuchen werden bekannterweise in der Nahrungsmittelindustrie zur Spirituosenherstellung, in der Futtermittelindustrie als Futtermittel oder zu einer energetischen Nutzung für die Energiegewinnung mittels Biogasanlagen verwendet. Derartige Presskuchen und Filterkuchen verfügen über hochwertige Obst-, Gemüse- oder Pflanzenbestandteile, jedoch ist eine direkte Weiterverarbeitung der Presskuchen und Filterkuchen zu Lebensmittelprodukten in der Regel nicht vorgesehen. Eine Weiterverarbeitung der Presskuchen ist teilweise ausschließlich nach einer zeit-, energie- und damit kostenaufwändigen Trocknung möglich. Daher werden die Prozessnebenprodukte häufig nicht weiterverwendet, sondern entsorgt.

Auch in EP 1 608 235 B1 oder DE 36 36 867 A1 sind Verfahren zur Verarbeitung einer Rohstoffmischung in einer Extrusionsmaschine zur Herstellung eines Lebensmittelprodukts offenbart.

Als eine weitere Aufgabe der vorliegenden Erfindung wird es angesehen, ein Verfahren bereitzustellen, um eine Rohstoffmischung, die ein Prozessnebenprodukt eines Lebensmittelherstellungsprozesses mit einem hohen Anteil an Fasern aufweist, in einer Extrusionsmaschine zu einem Lebensmittelprodukt verarbeiten zu können.

Diese Aufgabe wird erfindungsgemäß durch ein Verfahren mit den Merkmalen des Anspruchs 10 gelöst, wobei die Rohstoffmischung mit einem in den Ansprüchen 1 bis 9 definierten Verfahren mit der bewegten Zuführeinrichtung der Extrusionsmaschine zugeführt wird, wobei durch die Stellbewegung des Zuführkanalabschnitts und/oder des Einfülltrichters der Zuführeinrichtung die Rohstoffmischung an unterschiedlichen Einfüllpositionen innerhalb der Zuführöffnung einstellbar ist, wodurch eine besonders gleichmäßige Zuführung der Rohstoffmenge in die Extrusionsmaschine möglich ist, sodass die Rohstoffmischung mittels der Extrusionsmaschine verarbeitbar ist, wobei die Rohstoffmischung einen Faserrohstoff und einen Trägerrohstoff aufweist, wobei der Faserrohstoff ein Prozessnebenprodukt eines Lebensmittelherstellungsprozesses aufweist, und wobei der Trägerrohstoff Bestandteile eines Vollkorngetreides aufweist.

Dadurch, dass mittels der Stelleinrichtung unterschiedliche Bewegungsformen und Bewegungsgeschwindigkeiten, wie beispielweise kreisförmige, zickzack-förmige, schnelle oder langsame Bewegungen erzeugt werden können, können besonders vorteilhaft die schlecht fließfähigen und schlecht förderbaren Rohstoffmischungen zum Fließen angeregt werden. Durch eine hohe Fließfähigkeit und eine gute Förderbarkeit der Rohstoffmischung kann die Brückenbildung besonders vorteilhaft vermieden werden, sodass die Rohstoffmischung mittels der beweglichen Zuführeinrichtung förderbar gemacht wird und gleichmäßig in die Produktionsmaschine zugeführt werden kann, wodurch vorteilhafterweise eine gleichbleibende Konsistenz und Zusammensetzung des Extrudats sichergestellt werden kann.

Prozessnebenprodukte aus beispielweise einem Saftherstellungsprozess sind Presskuchen und Filterkuchen, die Schale, Fruchtfleisch, Kerne und Restsaft von Beeren oder Trauben beinhalten. Durch die Weiterverarbeitung der Prozessnebenprodukte kann der Anteil an nicht nutzbaren Nebenprodukten aus Lebensmittelherstellungsprozessen in vorteilhafter Weise reduziert werden. Es versteht sich, dass ein Vollkorngetreidemehl sämtliche Bestandteile des Vollkorngetreides wie beispielsweise eine Kleie, einen Keimling und ein Endosperm aufweist. Durch die Verarbeitung des Vollkorngetreidemehls zu einem Trägerstoff können besonders vorteilhaft vorgelagerte Trennungsprozesse zur Trennung der Kleie von den anderen Bestandteilen des Vollkorns eingespart werden, wodurch eine besonders wirtschaftliche Lebensmittelherstellung ermöglicht wird. Durch die Verarbeitung des vollen Korns inklusive des Keims, des Endosperms und insbesondere inklusive der ballaststoffreichen Hülle lässt sich besonders vorteilhaft ein ballaststoffreiches Lebensmittelprodukt herstellen.

Aufgrund der besonders vorteilhaften nutritiven Eigenschaften der ballaststoffreichen Lebensmittelprodukte lassen sich zucker- und fettarme und damit gesundheitsförderliche Lebensmittelprodukte herstellen. Durch die Verwendung des Extrusionsprozesses zur Verarbeitung von Nebenprodukten aus Lebensmittelverarbeitungsverfahren lassen sich diverse Produktformen und damit gänzlich neue Lebensmittelprodukte aus den hochwertigen Bestandteilen der Prozessnebenprodukte gestalten und herstellen. Beispielsweise können als Ersatz für Knabberwaren, wie zum Beispiel Kartoffelchips oder Erdnussflips neuartige extrudierte Snacks geschaffen werden, wie Flips, Ringe und beliebige andere extrudierbare Formen, oder aber Produkte für eine Zwischenmahlzeit, wie Riegel, die als Ersatz oder Ergänzung für den Verzehr von Obst oder Gemüse dienen können, hergestellt werden.

Vorteilhafterweise ist erfindungsgemäß vorgesehen, dass die Rohstoffmischung 5 Gew.-% bis 80 Gew.-% Faserrohstoff und 1 Gew.-% bis 95 Gew.-% Trägerrohstoff aufweist. Die Eigenschaften des extrudierten Lebensmittelprodukts, wie beispielsweise die Textur, die Dichte und die Porigkeit werden durch die Rohstoffeigenschaften, durch die Extrusionsparameter und/oder aber durch die Rezeptur der Rohstoffmischung bestimmt. Ein hoher Anteil an Faserrohstoffen im Bereich von 40 Gew.-% bis 80 Gew.-% innerhalb der Rohstoffmischung führt zu einem härteren und feinporigen Extrudat. Ein hoher Anteil an Trägerrohstoffen im Bereich von 50 Gew.-% bis 95 Gew.-% führt zu einer größeren Expansion des Extrudats und damit meist zu großen Poren. Somit lassen sich durch eine Veränderung der Zusammensetzung der Rohstoffmischung besonders vorteilhaft die Extrudateigenschaften und damit die Eigenschaften des extrudierten Lebensmittelprodukts beeinflussen.

In vorteilhafter Weise ist es optional möglich, dass der Anteil des Prozessnebenprodukts an dem Faserrohstoff 1 Gew.-% bis 100 Gew.-% beträgt, wodurch die Extrudateigenschaften besonders vorteilhaft durch die Zusammensetzung der Rohstoffmischung eingestellt werden können. Durch einen hohen Anteil des Prozessnebenprodukts an dem Faserrohstoff im Bereich von 60 Gew.-% bis 100 Gew.-% kann ein besonders hoher Grad der Wiederverwendung des Prozessnebenprodukts innerhalb der Rohstoffmischung erfolgen. Damit ist eine besonders wirtschaftliche Lebensmittelproduktherstellung möglich. Durch einen hohen Anteil des Prozessnebenprodukts an dem Faserrohstoff kann der Anteil an Fasern innerhalb der Rohstoffmischung gesteigert werden, wodurch ein besonders ballaststoffreiches Extrudat und Lebensmittelprodukt hergestellt werden kann. Bei einem geringen Anteil des Prozessnebenprodukts an dem Faserrohstoff im Bereich von 1 Gew.-% bis 40 Gew.-% und bei gleichzeitig gesteigertem Anteil des Trägerrohstoffs in der Rohstoffmischung kann ein Extrudat und Lebensmittelprodukt mit meist größeren Poren und damit mit geringerer Dichte hergestellt werden.

Eine vorteilhafte Umsetzung des Erfindungsgedankens sieht optional vor, dass das Prozessnebenprodukt pflanzliche Rohstoffe aus Presskuchen, Filterkuchen, Schalen und/oder Treber aufweist.

Die Prozessnebenprodukte, die beispielsweise aus einem Saftherstellungsprozess anfallen, sind beispielsweise Presskuchen und Filterkuchen, die Schalen, Fruchtfleisch, Kerne und Restsaft von Beeren oder Trauben beinhalten. Innerhalb dieser Presskuchen sind eine Vielzahl wertvoller Inhaltsstoffe, wie Vitamine und Ballaststoffe enthalten, die erst durch die Weiterverarbeitung zu einem besonders vitamin- und ballaststoffreichem Lebensmittelprodukt verwertet werden. Presskuchen können beispielsweise bei Saftherstellern, Keltereien oder obstverarbeitenden Betrieben anfallen und unterschiedliche Beeren- oder Obstsorten, wie beispielsweise Stein- oder Beerenobst, Apfel, Kirsche, Holunder, Birne, Rhabarber oder Johannisbeeren enthalten. Ebenso sind Rohstoffmischungen mit Bestandteilen wie beispielsweise Biertreber, Weintraubentrester oder Gemüseschalen, die in Brauereien, Winzerbetrieben oder gemüseverarbeitenden Betrieben anfallen, möglich. Durch die Weiterverarbeitbarkeit der Presskuchen oder Filterkuchen aus unterschiedlichen Beeren- und Obstsorten innerhalb des Extrusionsprozesses ist die Herstellung einer Vielzahl unterschiedlicher und für die menschliche Ernährung wertvoller Lebensmittelprodukte möglich.

Vorteilhafterweise ist erfindungsgemäß vorgesehen, dass das Prozessnebenprodukt 5 Gew.-% bis 20 Gew.-% Wasser aufweist. Für den Extrusionsprozess werden typischerweise aber nicht ausschließlich Feuchtegehalte der Rohstoffmischungen im Bereich von 15 Gew.-% bis 20 Gew.-% eingestellt, sodass eine direkte Weiterverarbeitung der Prozessnebenprodukte innerhalb der Rohstoffmischung mittels eines Extrusionsprozesses möglich ist. Außerdem ist durch einen Feuchtegehalt im Bereich von 5 Gew.-% bis 20 Gew.-% eine gute mikrobiologische Stabilität des Prozessnebenprodukts hergestellt. Bei einem Feuchtegehalt des Prozessnebenprodukts im Bereich von 5 Gew.-% bis 20 Gew.-% kann für die Weiterverarbeitung des Prozessnebenprodukts im Extrusionsprozess auf eine Hinzugabe von zusätzlichem Wasser oder eine zeit- und energieintensive Trocknung der Rohstoffmischung zur Reduzierung des Wassergehalts innerhalb der Rohstoffmischung verzichtet werden.

In vorteilhafter Weise ist es möglich, dass das Vollkorngetreide ausgewählt ist aus Mais, Reis, Weizen, Gerste, Roggen, Hafer oder einer Kombination daraus, wodurch eine Herstellung einer großen Vielfalt an unterschiedlichen extrudierten Lebensmittelprodukten möglich ist. Durch den hohen Anteil an Ballaststoffen, Mineralstoffen und Vitaminen innerhalb der Vollkorngetreide sind für die menschliche Ernährung wertvolle Lebensmittelprodukte herstellbar. Aufgrund der hohen Verfügbarkeit der Rohstoffe können die extrudieren Lebensmittelprodukte auch in großen Mengen zu wirtschaftlichen Bedingungen hergestellt werden.

Eine vorteilhafte Umsetzung des Erfindungsgedankens sieht optional vor, dass die Rohstoffmischung mindestens eine weitere Komponente aufweist, wodurch die Zusammensetzung der Rohstoffmischung variiert werden kann. Durch die Einstellung der Zusammensetzung der Rohstoffmischung können die Eigenschaften des Extrudats und des Lebensmittelprodukts besonders vorteilhaft eingestellt werden. Ebenso ist die Hinzugabe der weiteren Komponente in einer geringen Menge in die Rohstoffmischung denkbar, wobei die weitere Komponente ein Gewürz oder ein Aroma aufweisen kann. Durch die Hinzugabe der weiteren Komponente kann die Vielfalt an möglichen Rohstoffmischungen und damit hochwertigen Lebensmittelprodukten vorteilhaft gesteigert werden.

Vorteilhafterweise ist vorgesehen, dass die weitere Komponente ausgewählt ist aus Wasser, Süßungsmitteln, wie Zucker, Zuckeralkohole und Süßstoffe, Kochsalz, Fetten und Ölen, funktionellen Inhaltsstoffen, wie beispielsweise Vitamine, Mineralstoffe, ungesättigte Fettsäuren und Bakterienkulturen, Aromen und Kombinationen daraus. Derartige weitere Komponenten dienen der Veredelung der extrudierten Lebensmittelprodukte, wodurch beispielsweise Geschmack oder Farbgebung, Konsistenz und Nährwert vorteilhaft beeinflusst werden können. Damit lassen sich besonders schmackhafte und optisch ansprechende Lebensmittelprodukte mit hohem Nährwert herstellen.

Es hat sich gezeigt, dass es mit dem erfindungsgemäßen Verfahren möglich ist, nahezu alle relevanten Rohstoffmischungen, die der Extrusionsmaschine zugeführt werden, mit einer Einschneckenextrusionsvorrichtung zu extrudieren. Durch die erfindungsgemäße Ausgestaltung und Ansteuerung der Zuführeinrichtung können eine unerwünschte Brückenbildung oder eine ungleichmäßige Beladung der Extrusionsvorrichtung vermieden werden. Zudem kann die erfindungsgemäße Rohstoffmischung ohne weiteres in einer Einschneckenextrusionsvorrichtung verarbeitet und damit extrudiert werden, ohne dass beispielsweise ein Verklumpen einzelner Komponenten oder der extrudierbaren Rohstoffmischung befürchtet werden muss. Die Verwendung einer Einschneckenextrusionsvorrichtung hat gegenüber der ansonsten üblichen Verwendung einer Zweischneckenextrusionsvorrichtung erhebliche Vorteile, beispielsweise hinsichtlich der für die Herstellung und den Betrieb der Extrusionsvorrichtung deutlich geringer anfallenden Kosten.

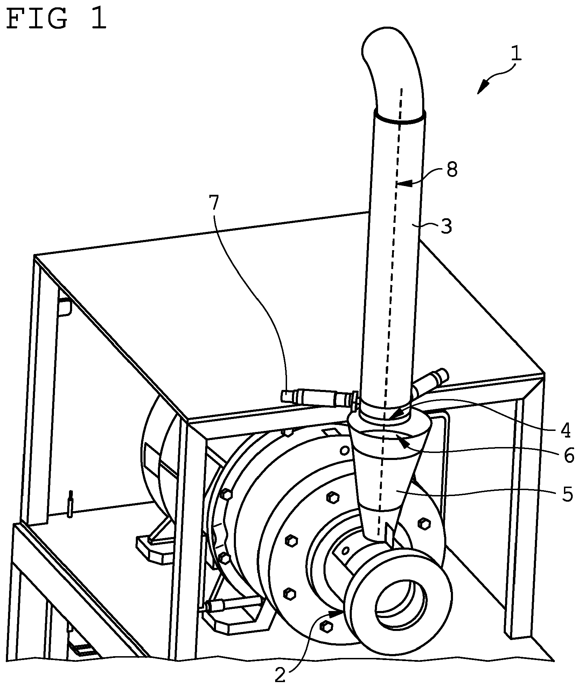

Nachfolgend werden beispielhafte Ausgestaltungen der Erfindungsgedanken näher erläutert. Die Ausgestaltung der Zuführeinrichtung ist in der Zeichnung in Figur 1 schematisch dargestellt. Eine bespielhafte Ausführung des Verfahrens zur Zuführung der Rohstoffmischung in die Extrusionsmaschine ist im nachstehenden Ausführungsbeispiel erläutert. Es zeigt:
Figur 1 eine schematische Darstellung einer erfindungsgemäß ausgestalteten Zuführeinrichtung zu Zuführung einer Rohstoffmenge in eine Extrusionsmaschine.

In Figur 1 ist eine schematische Darstellung einer erfindungsgemäßen Zuführeinrichtung 1 zur Zuführung einer in Figur 1 nicht dargestellten Rohstoffmenge in eine Extrusionsmaschine 2 gezeigt. Die Zuführeinrichtung 1 besteht aus einem Zuführkanalabschnitt 3 mit einer Austrittsöffnung 4 und einem Einfülltrichter 5 mit einer Einfüllöffnung 6. Die Rohstoffmenge tritt aus dem Zuführkanalabschnitt 3 aus und wird über die Einfüllöffnung 6 des Einfülltrichters 5 der Extrusionsmaschine 2 zugeführt.

Dabei ist der Zuführkanalabschnitt 3 in der dargestellten erfindungsgemäß ausgestalteten Zuführeinrichtung 1 senkrecht orientiert und oberhalb des Zuführtrichters 5 angeordnet. Durch die senkrechte Anordnung kann eine schwerkraftunterstützende Förderung erreicht werden. Die in der Figur 1 dargestellten Ausgestaltung der Zuführeinrichtung 1 sind zwei Stelleinrichtungen 7 im Bereich der Austrittsöffnung 6 am Zuführkanalabschnitt 3 angeordnet. Durch eine derartige Anordnung der zwei Stelleinrichtungen 7 können Stellbewegungen in unterschiedlichen Richtungen senkrecht zur Orientierung des Zuführkanalabschnitts 3 ausgeführt werden, wodurch eine Verlagerung der Austrittsöffnung 4 des Zuführkanalabschnitts 3 erzeugbar ist. Dadurch lässt sich beispielsweise ein relativer Abstand zwischen einer Längsachse 8 des Zuführkanalabschnitts 3 und einer Längsachse 8 des Einfülltrichters 5 erzeugen. Der Einfülltrichter 5 ist an der Produktionsmaschine 2 befestigt. Der Durchmesser der Einfüllöffnung 6 des Einfülltrichters 5 ist größer als der Durchmesser der Austrittsöffnung 4 des Zuführkanalabschnitts 3, wodurch die maximal zulässige Wegstrecke für die relative Verlagerung des Zuführkanalabschnitts 3 zum Einfülltrichter 5 festgelegt ist, um die aus der Austrittsöffnung 4 des Zuführkanalabschnitts 3 austretende Rohstoffmenge in die Einfüllöffnung 6 des Einfülltrichters 5 zuführen zu können.

### Ausführungsbeispiel

Eine Rohstoffmischung wird in einem Rohstoffmischer zu einer rieselfähigen Rohstoffmischung verarbeitet. Die Rohstoffmischung besteht aus einem Faserrohstoff und aus einem Trägerrohstoff. Der Faserrohstoff besteht aus dem Presskuchen, der als Prozessnebenprodukt eines Saftherstellungsprozesses entstand. Der Presskuchen beinhaltet die Schale, das Fruchtfleisch, die Kerne und den Restsaft von Beeren. Der Trägerrohstoff besteht aus Mais und weist die Bestandteile des vollen Maiskorns auf, sodass die Kleie, der Keimling und das Endosperm im Trägerrohstoff enthalten ist. Die Rohstoffmischung besteht aus 80 Gew.-% des Faserrohstoffs und aus 20 Gew.-% des Trägerrohstoffs. Aufgrund des Wassergehalts des Faserrohstoffs enthält die Rohstoffmischung 20 Gew.-% Wasser, wodurch die Rohstoffmischung für die Weiterverarbeitung in der Extrusionsmaschine geeignet ist. Eine Hinzugabe von Wasser oder eine Trocknung der Rohstoffmischung ist nicht notwendig. Aufgrund der faserbedingt schlecht fließfähigen Rohstoffmischung und der damit verbundenen hohen Gefahr der Brückenbildung, wird diese über die bewegliche Zuführeinrichtung der Extrusionsmaschine zugeführt. Dabei wird die Rohstoffmischung durch eine oszillierend bewegte Zuführeinrichtung hindurch in die Extrusionsmaschine gefördert, wodurch die Brückenbildung bei der Zufuhr der Rohstoffmischung vermieden wird. Der Extrusionsprozess wird mit einem Einschneckenextruder durchgeführt. Aufgrund des hohen Anteils des Rohstoffs bei gleichzeitig hohem Anteil an Fett und Protein innerhalb der Rohstoffmischung wird ein Extrudat erzeugt, welches nach Austritt aus der Düse kaum expandiert, sodass ein hartes und feinporiges Extrudat erzeugt wird. Die Düse ist derartig ausgestaltet, dass ein ringförmiges Extrudat hergestellt wird. Im Anschluss an den Extrusionsprozess wird das Extrudat mit weiteren Komponenten veredelt. Das Extrudat wird mit Öl benetzt und zuletzt mit Kochsalz gewürzt. Durch diese Veredelung des Extrudats wird ein schmackhaftes und ansprechendes Lebensmittelprodukt hergestellt.

### BEZUGSZEICHENLISTE

- 1.: Zuführeinrichtung
- 2.: Extrusionsmaschine
- 3.: Zuführkanalabschnitt
- 4.: Austrittsöffnung
- 5.: Einfülltrichter
- 6.: Einfüllöffnung
- 7.: Stelleinrichtung
- 8.: Längsachse

## Patentansprüche

1. Zuführeinrichtung (1) zur Zuführung einer Rohstoffmenge in eine Extrusionsmaschine (2), mit einem Zuführkanalabschnitt (3) mit einer Austrittsöffnung (4) und mit einem Einfülltrichter (5), wobei die Rohstoffmenge durch die Austrittsöffnung (4) des Zuführkanalabschnitts (3) in eine Einfüllöffnung (6) des Einfülltrichters (5) förderbar und durch den Einfülltrichter (5) hindurch der Extrusionsmaschine (2) zuführbar ist, **dadurch gekennzeichnet, dass** die Zuführeinrichtung (1) mindestens eine Stelleinrichtung (7) aufweist, mit welcher eine Stellbewegung des Zuführkanalabschnitts (3) und/oder des Einfülltrichters (5) erzeugbar ist, sodass eine Verlagerung des Zuführkanalabschnitts (3) relativ zu dem Einfülltrichter (5) bewirkt werden kann.

2. Zuführeinrichtung (1) nach Anspruch 1, **dadurch gekennzeichnet, dass** durch die mindestens eine Stelleinrichtung (7) erzeugbare Stellbewegung eine Verlagerung des Zuführkanalabschnitts (3) oder des Einfülltrichters (5) bewirkt, sodass ein Abstand zwischen einer Längsachse (8) des Zuführrohres und einer Längsachse (8) des Einfülltrichters (5) einstellbar ist.

3. Zuführeinrichtung (1) nach Anspruch 1 oder Anspruch 2, **dadurch gekennzeichnet, dass** durch die mindestens eine Stelleinrichtung (7) erzeugbare Stellbewegung die Verlagerung und/oder eine Verkippung des Zuführkanalabschnitts (3) oder des Einfülltrichters (5) bewirkt, sodass ein Neigungswinkel zwischen einer Längsachse (8) des Zuführkanalabschnitts (3) und einer Längsachse (8) des Einfülltrichters (5) einstellbar ist.

4. Zuführeinrichtung (1) nach einem der voranstehenden Ansprüche, **dadurch gekennzeichnet, dass** der laterale Abstand und/oder der Neigungswinkel zwischen der Längsachse (8) des Zuführkanalabschnitts (3) und der Längsachse (8) des Einfülltrichters (5) durch die Verlagerung und/oder die Verkippung des Zuführkanalabschnitts (3) und des Einfülltrichters (5) einstellbar ist.

5. Zuführeinrichtung (1) nach einem der voranstehenden Ansprüche, **dadurch gekennzeichnet, dass** die durch die mindestens eine Stelleinrichtung (7) erzeugbare Stellbewegung richtungswechselnd ausführbar ist.

6. Zuführeinrichtung (1) nach einem der voranstehenden Ansprüche, **dadurch gekennzeichnet, dass** die Wegstrecke der durch die mindestens eine Stelleinrichtung (7) erzeugbare Stellbewegung einstellbar ist.

7. Zuführeinrichtung (1) nach einem der voranstehenden Ansprüche, **dadurch gekennzeichnet, dass** die Geschwindigkeit der durch die mindestens eine Stelleinrichtung (7) erzeugbare Stellbewegung innerhalb der Wegstrecke veränderbar ist.

8. Zuführeinrichtung (1) nach einem der voranstehenden Ansprüche, **dadurch gekennzeichnet, dass** die Beschleunigung der durch die mindestens eine Stelleinrichtung (7) erzeugbare Stellbewegung innerhalb der Wegstrecke veränderbar ist.

9. Zuführeinrichtung (1) nach einem der voranstehenden Ansprüche, **dadurch gekennzeichnet, dass** der Durchmesser der Einfüllöffnung (6) des Einfülltrichters (5) größer ist als der Durchmesser der Austrittsöffnung (4) des Zuführkanalabschnitts (3).

10. Verfahren zur Verarbeitung einer Rohstoffmischung in einer Extrusionsmaschine zur Herstellung eines Lebensmittelprodukts, wobei die Rohstoffmischung mit der bewegten Zuführeinrichtung (1) gemäß einem der Ansprüche 1 bis 9 der Extrusionsmaschine zugeführt wird, wobei durch die Stellbewegung des Zuführkanalabschnitts (3) und/oder des Einfülltrichters (5) der Zuführeinrichtung (1) die Rohstoffmischung an unterschiedlichen Einfüllpositionen innerhalb der Zuführöffnung einstellbar ist, wodurch eine besonders gleichmäßige Zuführung der Rohstoffmenge in die Extrusionsmaschine möglich ist, sodass die Rohstoffmischung mittels der Extrusionsmaschine verarbeitbar ist, wobei die Rohstoffmischung einen Faserrohstoff und einen Trägerrohstoff aufweist, wobei der Faserrohstoff ein Prozessnebenprodukt eines Lebensmittelherstellungsprozesses aufweist, und wobei der Trägerrohstoff Bestandteile eines Vollkorngetreides aufweist.

11. Verfahren nach Anspruch 10, **dadurch gekennzeichnet, dass** die Rohstoffmischung 5 Gew.-% bis 80 Gew.-% Faserrohstoff und 1 Gew.-% bis 95 Gew.-% Trägerrohstoff aufweist.

12. Verfahren nach Anspruch 10 oder Anspruch 11, **dadurch gekennzeichnet, dass** der Anteil des Prozessnebenprodukts an dem Faserrohstoff 1 Gew.-% bis 100 Gew.-% beträgt.

13. Verfahren nach einem der Ansprüche 10 bis 12, **dadurch gekennzeichnet, dass** das Prozessnebenprodukt pflanzliche Rohstoffe aus Presskuchen, Filterkuchen, Schalen und/oder Treber aufweist.

14. Verfahren nach einem der Ansprüche 10 bis 13, **dadurch gekennzeichnet, dass** das Prozessnebenprodukt 5 Gew.-% bis 20 Gew.-% Wasser aufweist.

15. Verfahren nach einem der Ansprüche 10 bis 14, **dadurch gekennzeichnet, dass** das Vollkorngetreide ausgewählt ist aus Mais, Reis, Weizen, Gerste, Roggen, Hafer, Dinkel, aus einer anderen Getreidesorte oder aus einer Kombination daraus.

16. Verfahren nach einem der Ansprüche 10 bis 15, **dadurch gekennzeichnet, dass** die Rohstoffmischung mindestens eine weitere Komponente aufweist.

17. Verfahren nach einem der Ansprüche 10 bis 16, **dadurch gekennzeichnet, dass** die weitere Komponente ausgewählt ist aus Wasser, Süßungsmitteln, Kochsalz, Fetten und Ölen, funktionellen Inhaltsstoffen, Aromen und Kombinationen daraus.

18. Verfahren nach einem der Ansprüche 10 bis 17, **dadurch gekennzeichnet, dass** die der Extrusionsmaschine zugeführte Rohstoffmischung mit einer Einschneckenextrusionsvorrichtung extrudiert wird.

## Claims

1. Supply unit (1) for supplying a raw material quantity into an extrusion machine (2), comprising a supply channel portion (3) having an exit opening (4) and comprising a feed hopper (5), wherein the raw material quantity can be conveyed through the exit opening (4) of the supply channel portion (3) into a feed opening (6) of the feed hopper (5) and supplied through the feed hopper (5) to the extrusion machine (2), **characterised in that** the supply unit (1) has at least one actuating unit (7), with which an actuating movement of the supply channel portion (3) and/or of the feed hopper (5) can be generated, so that a displacement of the supply channel portion (3) relative to the feed hopper (5) can be brought about.

2. Supply unit (1) according to claim 1, **characterised in that** the actuating movement that can be generated by the at least one actuating unit (7) causes a displacement of the supply channel portion (3) or of the feed hopper (5), so that a distance between a longitudinal axis (8) of the supply tube and a longitudinal axis (8) of the feed hopper (5) is adjustable.

3. Supply unit (1) according to claim 1 or claim 2, **characterised in that** the actuating movement that can be generated by the at least one actuating unit (7) causes the displacement and/or a tilting of the supply channel portion (3) or of the feed hopper (5), so that an angle of inclination between a longitudinal axis (8) of the supply channel portion (3) and a longitudinal axis (8) of the feed hopper (5) is adjustable.

4. Supply unit (1) according to one of the preceding claims, **characterised in that** the lateral distance and/or the angle of inclination between the longitudinal axis (8) of the supply channel portion (3) and the longitudinal axis (8) of the feed hopper (5) is adjustable by the displacement and/or the tilting of the supply channel portion (3) and of the feed hopper (5).

5. Supply unit (1) according to one of the preceding claims, **characterised in that** the actuating movement that can be generated by the at least one actuating unit (7) can be executed in alternating directions.

6. Supply unit (1) according to one of the preceding claims, **characterised in that** the travel path of the actuating movement that can be generated by the at least one actuating unit (7) is adjustable.

7. Supply unit (1) according to one of the preceding claims, **characterised in that** the speed of the actuating movement that can be generated by the at least one actuating unit (7) is changeable within the travel path.

8. Supply unit (1) according to one of the preceding claims, **characterised in that** the acceleration of the actuating movement that can be generated by the at least one actuating unit (7) is changeable within the travel path.

9. Supply unit (1) according to one of the preceding claims, **characterised in that** the diameter of the feed opening (6) of the feed hopper (5) is larger than the diameter of the exit opening (4) of the supply channel portion (3).

10. Method for processing a raw material mixture in an extrusion machine for manufacturing a food product, wherein the raw material mixture is supplied to the extrusion machine by the moving supply unit (1) according to one of claims 1 to 9, wherein the raw material mixture is adjustable at different feed positions within the supply opening by the actuating movement of the supply channel portion (3) and/or of the feed hopper (5) of the supply unit (1), thus allowing for a particularly uniform supply of the raw material quantity into the extrusion machine so that the raw material mixture can be processed by the extrusion machine, the raw material mixture comprising a fibre raw material and a carrier raw material, the fibre raw material containing a process by-product of a food manufacturing process, and the carrier raw material containing wholegrain cereal constituents.

11. Method according to claim 10, **characterised in that** the raw material mixture contains 5 wt.% to 80 wt.% fibre raw material and 1 wt.% to 95 wt.% carrier raw material.

12. Method according to claim 10 or claim 11, **characterised in that** the proportion of the process by-product in the fibre raw material is 1 wt.% to 100 wt.%.

13. Method according to one of claims 10 to 12, **characterised in that** the process by-product contains plant-based raw materials consisting of press cakes, filter cakes, husks and/or spent grains.

14. Method according to one of claims 10 to 13, **characterised in that** the process by-product contains 5 wt.% to 20 wt.% water.

15. Method according to one of claims 10 to 14, **characterised in that** the wholegrain cereal is selected from maize, rice, wheat, barley, rye, oats, spelt, another cereal type or a combination thereof.

16. Method according to one of claims 10 to 15, **characterised in that** the raw material mixture has at least one further component.

17. Method according to one of claims 10 to 16, **characterised in that** the further component is selected from water, sweetening agents, table salt, fats and oils, functional ingredients, flavourings, and combinations thereof.

18. Method according to one of claims 10 to 17, **characterised in that** the raw material mixture supplied to the extrusion machine is extruded with a single-screw extrusion device.

## Revendications

1. Dispositif d'alimentation (1) destiné à alimenter une extrudeuse (2) en une quantité de matière première, comportant un segment de conduit d'alimentation (3) doté d'un orifice de sortie (4) et une trémie (5), la quantité de matière première pouvant être transportée en passant par l'orifice de sortie (4) du segment de conduit d'alimentation (3) vers un orifice de remplissage (6) de la trémie (5) et pouvant être amenée à travers la trémie (5) dans l'extrudeuse (2), **caractérisé en ce que** le dispositif d'alimentation (1) présente au moins un dispositif de réglage (7) au moyen duquel un mouvement de réglage du segment de conduit d'alimentation (3) et/ou de la trémie (5) peut être généré, de telle sorte qu'un déplacement du segment de conduit d'alimentation (3) par rapport à la trémie (5) peut être effectué.

2. Dispositif d'alimentation (1) selon la revendication 1, **caractérisé en ce que** le mouvement de réglage qui peut être généré par l'au moins un dispositif de réglage (7) effectue un déplacement du segment de conduit d'alimentation (3) ou de la trémie (5), de telle sorte qu'un écart entre un axe longitudinal (8) du tube d'alimentation et un axe longitudinal (8) de la trémie (5) peut être réglé.

3. Dispositif d'alimentation (1) selon la revendication 1 ou la revendication 2, **caractérisé en ce que** le mouvement de réglage qui peut être généré par l'au moins un dispositif de réglage (7) effectue le déplacement et/ou un basculement du segment de conduit d'alimentation (3) ou de la trémie (5), de telle sorte qu'un angle d'inclinaison entre un axe longitudinal (8) du segment de conduit d'alimentation (3) et un axe longitudinal (8) de la trémie (5) peut être réglé.

4. Dispositif d'alimentation (1) selon l'une des revendications précédentes, **caractérisé en ce que** l'écart latéral et/ou l'angle d'inclinaison entre l'axe longitudinal (8) du segment de conduit d'alimentation (3) et l'axe longitudinal (8) de la trémie (5) peut être réglé par le déplacement et/ou le basculement du segment de conduit d'alimentation (3) et de la trémie (5).

5. Dispositif d'alimentation (1) selon l'une des revendications précédentes, **caractérisé en ce que** le mouvement de réglage qui peut être généré par l'au moins un dispositif de réglage (7) peut être réalisé avec changement de direction.

6. Dispositif d'alimentation (1) selon l'une des revendications précédentes, **caractérisé en ce que** le trajet du mouvement de réglage qui peut être généré par l'au moins un dispositif de réglage (7) peut être réglé.

7. Dispositif d'alimentation (1) selon l'une des revendications précédentes, **caractérisé en ce que** la vitesse du mouvement de réglage qui peut être généré par l'au moins un dispositif de réglage (7) peut être modifiée dans le trajet.

8. Dispositif d'alimentation (1) selon l'une des revendications précédentes, **caractérisé en ce que** l'accélération du mouvement de réglage qui peut être généré par l'au moins un dispositif de réglage (7) peut être modifiée dans le trajet.

9. Dispositif d'alimentation (1) selon l'une des revendications précédentes, **caractérisé en ce que** le diamètre de l'orifice de remplissage (6) de la trémie (5) est supérieur au diamètre de l'orifice de sortie (4) du segment de conduit d'alimentation (3).

10. Procédé de transformation d'un mélange de matière première dans une extrudeuse, destiné à la fabrication d'un produit alimentaire, l'extrudeuse étant alimentée en mélange de matière première au moyen du dispositif d'alimentation (1) déplacé selon l'une des revendications 1 à 9, le mélange de matière première pouvant être réglé dans différentes positions de remplissage dans l'orifice d'alimentation par le mouvement de réglage du segment de conduit d'alimentation (3) et/ou de la trémie (5) du dispositif d'alimentation (1), moyennant quoi une amenée particulièrement régulière de la quantité de matière première dans l'extrudeuse est possible, de telle sorte que le mélange de matière première peut être transformé au moyen de l'extrudeuse, le mélange de matière première présentant une matière première fibreuse et une matière première de support, la matière première fibreuse présentant un sous-produit de processus issu d'un processus de fabrication alimentaire, et la matière première de support présentant des constituants d'une céréale complète.

11. Procédé selon la revendication 10, **caractérisé en ce que** le mélange de matière première présente 5 % en poids à 80 % en poids de matière première fibreuse et 1 % en poids à 95 % en poids de matière première de support.

12. Procédé selon la revendication 10 ou la revendication 11, **caractérisé en ce que** la part de sous-produit de processus dans la matière première fibreuse est de 1 % en poids à 100 % en poids.

13. Procédé selon l'une des revendications 10 à 12, **caractérisé en ce que** le sous-produit de processus présente des matières premières végétales issues de tourteaux, de gâteaux de filtration, de pelures et/ou de drêche.

14. Procédé selon l'une des revendications 10 à 13, **caractérisé en ce que** le sous-produit de processus présente 5 % en poids à 20 % en poids d'eau.

15. Procédé selon l'une des revendications 10 à 14, **caractérisé en ce que** la céréale complète est choisie parmi le maïs, le riz, le blé, l'orge, le seigle, l'avoine, l'épeautre, un autre type de céréale ou une combinaison de ceux-ci.

16. Procédé selon l'une des revendications 10 à 15, **caractérisé en ce que** le mélange de matière première présente au moins un autre composant.

17. Procédé selon l'une des revendications 10 à 16, **caractérisé en ce que** l'autre composant est choisi parmi l'eau, les édulcorants, le sel, les graisses et huiles, les ingrédients fonctionnels, les arômes et les combinaisons de ceux-ci.

18. Procédé selon l'une des revendications 10 à 17, **caractérisé en ce que** le mélange de matière première amené dans l'extrudeuse est extrudé au moyen d'un dispositif d'extrusion à une vis.
